# EUROPEAN PATENT SPECIFICATION

(11) **EP 0 857 607 B1**
(45) Date of publication and mention of the grant of the patent: **24.09.2003**
(21) Application number: 98200060.6
(22) Date of filing: 13.01.1998
(51) Int. Cl.: B60P 3/03

(54) **Device for transporting valuables**
Vorrichtung zum Befördern von Wertgegenständen
Dispositif pour le transport d'objets de valeur

(30) Priority: 14.01.1997 BE 9700034
(43) Date of publication of application: 12.08.1998
(73) Proprietor: Agri Ventures International S.A., 2180 Ekeren (BE)
(72) Inventor: Darley, Billy F., 2180 Ekeren (BE)
(74) Representative: Donné, Eddy

(56) References cited:
- WO-A-94/15812
- FR-A- 2 614 012
- FR-A- 2 674 197
- GB-A- 1 312 921
- US-A- 3 263 943

## Description

The present invention relates to a device for transporting valuables, wich means money in first instance, but more in general also other valuables, such as jewellary, precious stones, precious metals, paper securities and so forth.

The invention hereby aims at a device wich is destined for the safe transport of such valuables over the public road, and more particular to a device for transporting valuables according to the characteristics of the preamble of independent claim 1. Devices for such transport are already known from documents WO 94/15812 and FR 2.614.012. The aim of the invention consists in providing an improved device wich is built in such a way that the stealing of the valuables by means of an armed hold-up is made almost impossible and the valuables can be handled in an optimal manner during transport.

To this end,the invention relates to a device for transporting valuables, wich is of the type comprising at least a vehicle wich can be taken up therein, removed therefrom respectively, and means to take up these containers in the loading space, and to remove them therefrom respectively, whereby the loading space is realised in the shape of a drum system with a revolving drum, characterised in that said drum is provided with secondary drums, wich can revolve therein and wich are in turn provided with storage spaces.

Such drum system, especially when provided with secondary drums, offers the advantage that in case of a hold-up with heavy explosions the drum is deformed at the most, resulting in that it is impossible to remove the containers in a short time.

Preferably, the device is further characterised in that it comprises at least one station for the unloading and/or loading of such containers; and in that said means to take up the containers in the loading space and to remove them therefrom respectively consist of transport means for the containers, which allow to make a connection between such station and the loading space of the vehicle in order to move the containers from the loading space into the station and/or to move the containers from the station into the loading space.

Because of the presence of said transport means, said containers can be loaded and/or unloaded without human intervention, resulting in that this action need not be executed by the escort or the driver of the vehicle. Because of the direct and automatic transfer between the loading space and a station, the possibility is offered to use particularly heavy and solid containers which are difficult to take away and crack in case of a brutal hold-up.

Preferably the transport means comprise a gate at the height of the outer wall of the vehicle, as well as a corresponding gate in a wall at the station, whereby both gates are positioned in such a way that they can be placed opposite one another by positioning the vehicle with the outer wall in which the gate is located directly in front of, and possibly against the wall of the station in which the corresponding gate is located. In this way it is obtained that the transport system has no weak spots, which would allow for a container to be intercepted during the transfer.

More specifically it is preferred that containers are used with a minimal weight of at least 150 kilograms, so that, in case they could be removed from the vehicle during a hold-up, they can almost not be carried.

In the most preferred embodiment, oblong containers will be used, preferably in the shape of a torpedo. Such oblong containers offer the advantage that they are very appropriate to be stored in a drum system. The torpedo shape offers the advantage that a container is obtained which is round and smooth at all sides and which is therefore difficult to carry manually, which imposes difficulties in case of a possible theft.

In order to better show the characteristics of the invention, a preferred embodiment is described hereafter, as an example without any limiting character whatsoever, reference being made to the accompanying drawings in which:
figure 1 schematically represents a device according to the invention;
figure 2 represents a cross-section according to line II-II in figure 1;
figure 3 schematically represents a cross-section according to line III-III in figure 1, for an other position;
figure 4 represents more in detail a cross-section according to line IV-IV in figure 1;
figure 5 represents in an enlarged view the container which is indicated with F5 in figure 1.
figure 6 represents a schematical top-down view of a variant of the part represented in figure 3;
figure 7 represents an other variant of the device according to the invention.

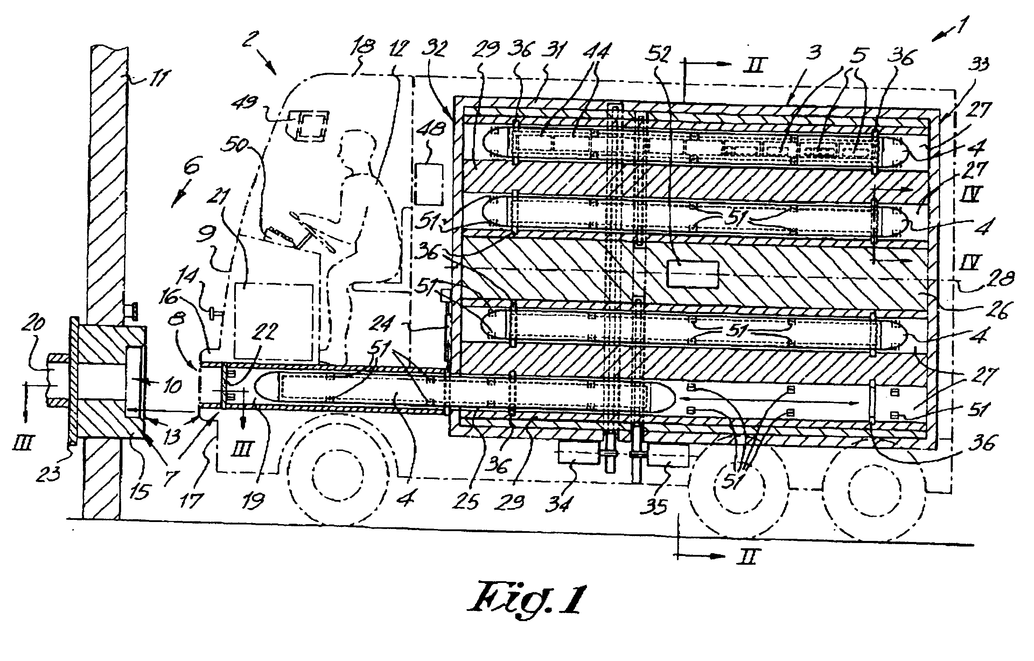

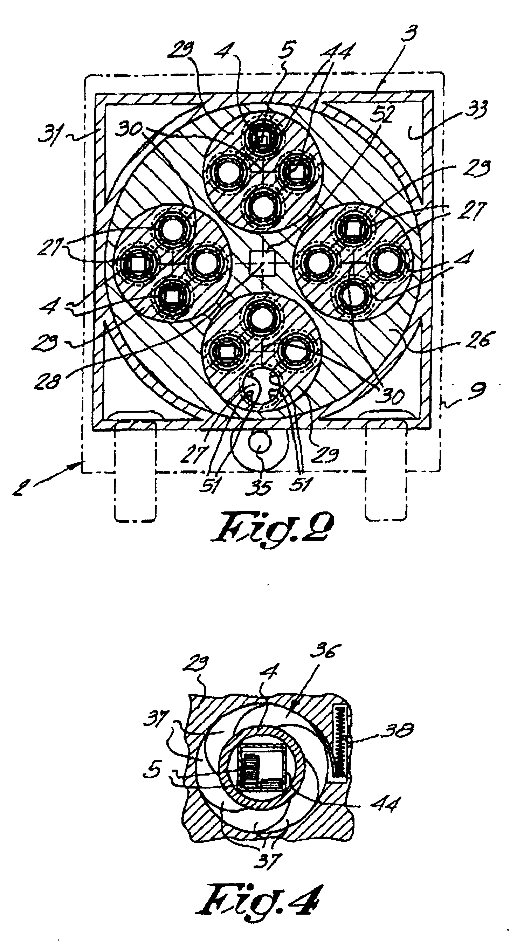

As represented in figures 1 and 2 the device 1 according to the invention mainly consists in the combination of a vehicle 2 which is provided with a loading space 3 with removable containers 4 for storing valuables 5, at least one station 6 for unloading and/or loading the containers 4, and transport means 7 for the containers 4, which allow to form a connection between such station 6 and the loading space 3 of the vehicle in order to bring the containers 4 from the loading space 3 into the station 6 and/or to bring the containers 4 from the station 6 into the loading space 3.

The vehicle 2 can be of a different nature. Preferably it will be an armoured van.

The above-mentioned station 6 indicates the place where the valuables 5 are to be delivered and/or valuables 5 are to be collected. In reality such station 6 will for instance be part of a bank affiliation, so that money and such like can be supplied and carried off in a safe way. Hereby, the intention is that all bank affiliates are provided with such station 6.

According to the invention the concerned stations 6 and the vehicles 6 used therewith are executed in such a way that the containers 4 can be brought directly from the vehicle 2 in a station 6 by driving the vehicle 2 until against this station 6.

As represented in figure 1 the transport means 7 comprise to this end preferably a gate 8 at the height of the outer wall 9 of the vehicle 2, as well as a corresponding gate 10 in a wall 11 at the place of the station 6, whereby both gates 8-10 are situated such that the can be placed opposite one another by positioning the vehicle 2 with the outer wall 9 in which the gate 8 is located directly in front of, and possibly against the wall 11 of the station 6 in which the corresponding gate 10 is located.

The gate 8 is preferably located in the front wall of the vehicle 2, because this offers the advantage that the driver 12 can easily position the vehicle 2 at the correct place in front of the station 6.

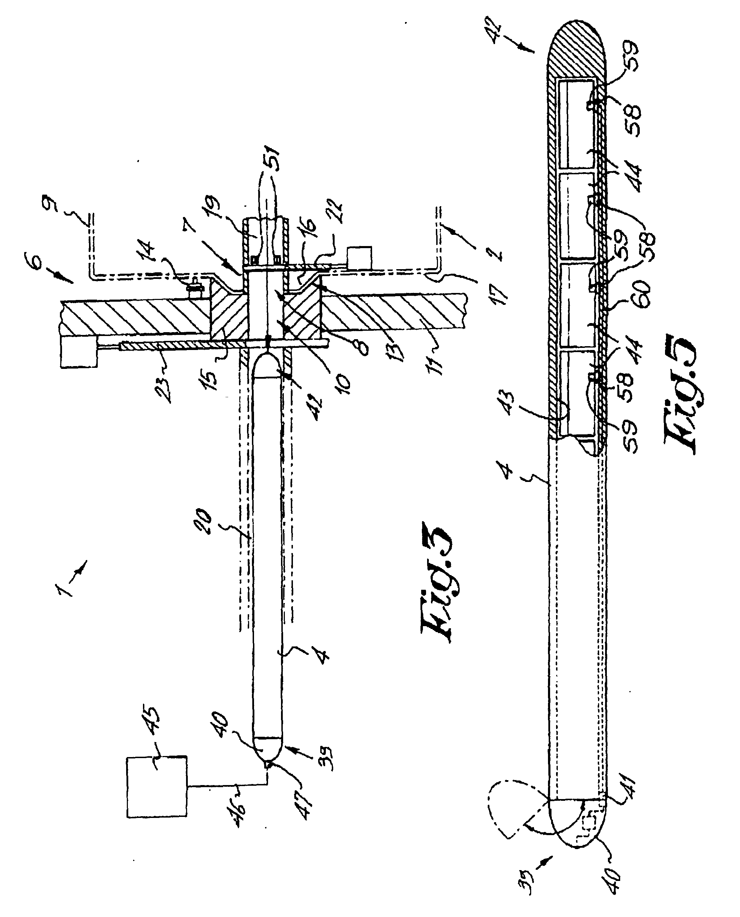

Preferably the whole is provided with positioning means which allow a correct positioning of the vehicle 2 with respect to the station 6. These positioning means can be of different nature. In the represented example, as represented in figures 1 and 3, use is made of, on the one hand, mechanical positioning means 13, and, on the other hand, opto-electronic positioning means 14.

The mechanical positioning means 13 consist of connection parts 15 and 16, at the station 6 and at the vehicle 2 respectively, which fit into each other, on the one hand in the form of a sort of buffer with a conically narrowing seat, and on the other hand in the form of a protrusion which for instance forms part of the bumper 17 of the vehicle 2.

The opto-electronic positioning means 14 consist of an infra-red guidance system which allows the driver of the vehicle 2 to bring the vehicle 2 in the correct direction when approaching the wall 11. This can for instance be done by reading a signal which is displayed on a display or such like in the driver's cabin 18.

It is clear that other positioning means are not excluded. The connection part 15 can for instance be applied movably in the wall 11, whereby the positioning takes place by first positioning the vehicle 2 at the height of the station 6 in front of the wall 11, and subsequently moving the connection part 15 sideways, for instance automatically, until it is located precisely in front of the connection part 16.

The transport means 7 further mainly consist of a channel 19 which is for instance formed by a solid tube and which extends in the vehicle 2 from the loading space 3 to said gate 8, as well as of a space 20 in the station 6, preferably also in the shape of a channel, in which a container 4 can be received, be put ready for transport respectively. As represented, the channel 19 extends under the driver's cabin 18, and preferably under the engine 21 of the vehicle 2. As a result the channel 19 is hard to reach from the outside and also well protected in case of a hold-up or such like with explosives.

In the represented example, the different gates 8 and 10 can be closed by means of shutters 22-23. Furthermore, several intermediate shutters can be provided, for instance a shutter 24 at the place of the access opening 25 of the loading space 3.

The loading space 3 is, as represented in figures 1 and 2, executed in the form of a drum system with a revolving drum 26 in which different storage rooms 27 are applied. This drum 26 preferably has a horizontal rotating shaft 28 which extends in the longitudinal direction of the vehicle 2 and a diameter which is almost equal to the width of the vehicle 2.

In the drum 26 a number of secondary drums 29, preferably four, are applied which can be rotated along rotating shafts 30 which are parallel to the rotating shaft 28. In each secondary drum 29 four of said storage spaces 27 are provided.

The storage spaces 27 consist in the represented example of cylindrical channels which extend in the axial direction through the drum 26, and more specifically through the secondary drums 29.

The drum 26 is mounted together with the secondary drums 29 in a solid housing 31, in the shape of a cell, which also assures that the storage spaces 27 are closed at their extremities by means of the walls 32 and 33 extending along them.

The said access opening 25 is preferably located at the bottom in the wall 32, in a direct line with the bottommost storage space 27.

The revolving of the drum system is done by means of one or more drives, in this case a drive 34 for the drum 26 and a drive 35 which co-operates with the bottommost secondary drum 29.

The containers 4 consist, as represented, preferably of oblong recipients, preferably in the shape of a torpedo.

The whole is preferably provided with different locking means.

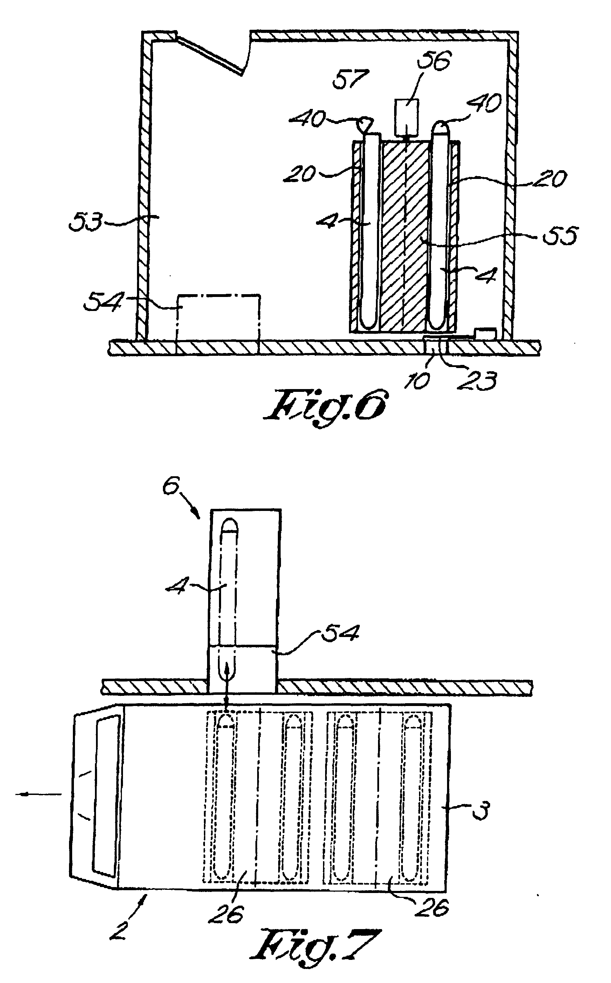

In the examples of the figures the containers 4 are clamped by means of diaphragm-shaped or iris-shaped clamping means 36, for instance in the shape of rubber fins 37 which, as represented in figure 4, close themselves around the containers 4, for instance under the influence of the force of a spring 38, whereby the unlocking takes place by means of drive means which are not represented.

It is clear that other locking means can be provided, for instance for blocking the drum 26 and/or the secondary drums 29.

The torpedo-shaped containers 4 can, as represented in figure 4, preferably be opened at one extremity 39, which is provided to this end with a removable head 40. This head 40 is provided with a secured lock 41, which can for instance only be opened by means of a code.

The other extremity 42 of the container 4 preferably consists of a massive material, for instance steel. The intention thereof is that the containers 4 are loaded in the vehicle 2 with the extremity 42 directed backwards. The massive extremity 42 prevents that, by means of explosives, an opening can be made in the rear side of the vehicle 2, which would extend into the storage space 43 of such container 4.

The containers 4 preferably have a weight of 150 kilograms in empty condition, resulting in that they are difficult to carry manually. This weight can be obtained by providing these containers 4 with a thick steel wall.

The valuables 5 can either be put loosely in the storage space 43, or in boxes or cases 44.

The whole is preferably provided with a data network or is connected to a data network, with a computer unit 45 at the place of each station 6, which allows that the delivered containers 4 can only be opened by means of an appropriate code. To this end, possibly a connection 46 can be realised by means of a plug system 47 or such like.

In each container 4, more specifically in the head 40 thereof, a chip is integrated for storing data concerning the contents of the container 4, as well as for storing possible codes and such like.

The vehicle 2 will preferably be provided with an on-board computer 48 and a display screen 49 and keyboard 50 connected therewith, for entering ride data, retrieving it respectively.

The working and use of the device is mainly as follows.

In the concerned stations 6, between which the transport is to be done, the containers 4 are loaded with the valuables 5 to be transferred. Also electronic information is stored in the chip of the head 40 relating to the contents, the origin, the destination and so forth. This information is preferably also transmitted to the concerned stations 6 by means of for instance an existing data network, for instance the known Banksys system.

The transport company is only informed of the place of origin and the place of destination. The driver 12 receives this information at the start of the ride by means of the on-board computer 48, or by means of a chip card which is charged beforehand and the display screen 49.

The transfer of a container 4 between a station 6 and a vehicle 2 can preferably only take place after a check has been done by the computer unit 45.

It is clear that the necessary protections are provided which ensure that the containers 4 can only be moved when the vehicle 2 is present at a station 6. The movement itself preferably takes place automatically, for instance by the fact that the containers can be rolled in the longitudinal direction by means of rolls 51 which can for instance be driven by drive means which are not represented. Of course other drive means can be used to move the containers 4.

During the transport the shutters 22-23-24 are of course closed.

It is clear that also a data connection can be realised between the computer unit 45 and the on-board computer 48, in order to exchange recognition codes during the loading and unloading, in order to avoid that containers 4 are delivered at the wrong place, whereby the shutters 22 and 24 can only be opened when the vehicle 2 is at the correct station 6.

It is clear that in this way money transports between different bank affiliates, principal seats, the National Bank and such like can be executed in a safe way.

The invention also relates to a device 1 whereby the stations 6 consist of cash dispensers or consist of units which co-operate with such cash dispensers, whereby these stations 6 are provided with means which allow that money which is supplied by means of said containers 45 is automatically inserted in the cash dispensers. The containers 4 can then be loaded with money cassettes which are automatically removed from the containers 4 in the station 6 and inserted in the corresponding cash dispenser.

The cash dispensers are hereby preferably realised in such a way that they can be loaded with containers 4 at the front.

The whole can be provided with a transmitter unit 52, which is preferably integrated in the drum 26, by means of which a localisation by means of a satellite can be done, in case the entire vehicle 2 is stolen.

Although said drum system and the use of torpedo-shaped containers 4 is preferred, it is clear that also other forms of cell-shaped loading spaces 3 and containers 4 can be used. In the case of a device which is destined for loading cash dispensers with money, it is for instance not essential that the cassettes are put in containers 4, and the cassettes themselves may be made in the shape of a container.

In order to reduce the weight of the drum system, instead of massive drums 26 and 29 use can also be made of drums which are essentially tube-shaped.

In figure 6 a variant is represented whereby said station 6 is mainly formed by a technical room 54 which can only be accessed by authorised personnel and which is preferably adequately secured against burglary.

In case the device is destined among other things for delivering money to institutions which are provided with a cash dispenser 54, this cash dispenser 54 and the space 20 in which a container 4 can be received, will be included in the same technical room 54, as is schematically represented in figure 6. It is clear that this can also apply to two interconnecting technical rooms.

According to a particular characteristic of the invention, the space 20, as represented in figure 6, will be part of a container 55 which is realised in such a way that, after a container 4 has been taken up therein, this container 4 is directed outward with a part thereof, preferably the head 40, and more specifically sticks out of this container 55, in such a way that the container 4, while present in the space 20, can be opened and emptied, filled respectively. This offers the advantage that the container 4 which has a heavy weight, need never be moved by persons.

As is still represented in figure 6, the container 55 can be realised in the shape of a magazine which contains several spaces 20 which can be positioned at will in front of the gate 10, in such a way that when a full container 4 has been taken up in the space 20 out of the vehicle 2, subsequently another container 4, which may be empty or not, can be brought from the container 55 into the vehicle 2. According to figure 6 the container 55 is to this end realised in the shape of a drum which, for instance by means of a motor 56, can rotate along a horizontal shaft.

It is clear that such container 55 in the shape of a magazine can also be used in case no technical room 53 is present.

As represented in figure 7, it is not excluded, instead of transferring the containers 4 in the longitudinal direction of the vehicle 2 to a station 6, to transfer them in the transversal direction of the vehicle 2, whereby the vehicle 2 needs to be positioned sideways along the wall of the concerned building during loading and unloading. The station 6 can also in this case consist of a container with one or more spaces 20 and/or a technical room 53 and/or a cash dispenser 54.

Furthermore, it is not excluded to transport the containers 4 not according to their longitudinal direction, but to transfer them sideways from the vehicle 2 to a station 6, or vice versa.

It is clear that the cases or cassettes 44 can be provided with a system for self-destruction and/or destruction of the contents, which may or may not be triggered automatically in case unauthorised persons try to take hold of the container 4, of the cases 44 or of the contents of these cases 44.

The known cases 44, also called boxes, generally have contact points with which they can be connected to a system which allows to communicate with these cases 44 for instance to, if necessary, trigger a destruction. In the case of the present invention the containers 4, as schematically represented in figure 5, can internally be provided with contact points 58 which automatically come into contact with the contact points 59 of the cases 44 and which are connected by means of an electric connection 60 to a suitable circuit for triggering said destruction, whereby the connection with the surroundings may or may not be realised in a wireless way. An advantage hereof is that the generally very sensitive contact points 59 of the cases 44 can difficultly be made filthy by atmospheric pollution, because of the fact that the cases 44 are hidden in the container 4.

It is to be noted that the oblong containers 4 in first instance relate to containers with a minimal length of one meter, and even better 1,5 meters. A practical diameter of the containers 4 is between 30 and 40 centimeters.

The cases 44 can instead of a rectangular cross-section also have a round or other cross-section.

Finally it is noted that a great advantage of the preferred embodiment of the invention resides in that the transport means 7 are of a mechanical or electro-mechanical nature resulting in that, on the one hand, the incertainties of a pneumatic transport system are excluded and, on the other hand, it is possible to transport relatively heavy containers 4.

It is also noted that according to the invention the gate 8 is preferably located at the height of the outer wall of the vehicle 2 and that this gate 8 can co-operate directly with the gate 10 at the wall of a building 11, in other words without use of intermediate parts, such as tubes or such like which could form a weak link in the whole.

It is to be noted that the gate 8 can be any kind of loading and unloading opening.

The gate 10 can be any kind of passage which allows for a container 4 to be received in a station 6 or removed from this station 6.

Finally the invention also relates to a cash dispenser with the characteristic that it, is provided with an automatic loading system which allows that the cash dispenser can be loaded from the outside, preferably by means of a device as described above.

The present invention is in no way limited to the embodiment described above and represented in the drawings, but such device for transporting valuables can be realised in different shapes and dimensions without leaving the scope of the invention as defined by the claims.

## Claims

1. Device for transporting valuables, comprising a vehicle (2) which is provided with a loading space (3) with containers (4) for valuables (5) which can be taken up therein, removed therefrom respectively, and means to take up said containers (4) in the loading space (3) and remove them therefrom respectively, whereby the loading space (3) is realised in the shape of a drum system with a revolving drum (26), **characterised in that** said drum (26) is provided with secondary drums (29) which can revolve therein and which are in turn provided with storage spaces (27).

2. Device according to claim 1, **characterised in that** it comprises at least one station (6) for unloading and/or loading such containers (4); and **in that** said means to take up the containers (4) in the loading space (3) and remove them therefrom respectively consist of transport means for the containers (4), which allow to form a connection between such station (6) and the loading space (3) of the vehicle (2) in order to bring the containers (4) from the loading space (3) into the station (6) and/or to bring containers (4) from the station (6) into the loading space (3).

3. Device according to claim 2, **characterised in that** the transport means (7) comprise a gate (8) at the height of the outer wall. (9) of the vehicle(2), as well as a corresponding gate (10) in a wall (11) at the station (6), whereby both gates (8-10) are situated in such a way that they can be placed opposite one another by positioning the vehicle (2) with the outer wall (9) in which the gate (8) is located directly in front of, and possible against the wall (11) of the station (6) in which the corresponding gate (10) is located.

4. Device according to claim 3, **characterised in that** the gate (8) of the vehicle (2) is located in the front wall (9).

5. Device according to claim 3 or 4, **characterised in that** it is provided with positioning means (13-14) which allow for a correct positioning of the vehicle (2) with respect to the station (6).

6. Device according to any one of the claims 3 to 5, **characterised in that** it is provided with means which allow for making a data connection between the vehicle (2) and the concerned station (6) during the loading and/or unloading of such containers (4), in order to exchange check data.

7. Device according to any one of claims 3 to 6, **characterised in that** the transport means (7) comprise a channel (19) which extends from the loading space (3) to the corresponding gate (8) which is located at the vehicle (2).

8. Device according to claim 7, **characterised in that** the loading space (3) is located behind the driver's cabin (18) of the vehicle (2) and **in that** said channel (19) extends under the driver's cabin (18), preferably under the engine (21) of the vehicle (2).

9. Device according to any one of claims 3 to 8, **characterised in that** at least said gates (8-10) are closed by means of movable shutters (22-23-24).

10. Device according to any of the preceeding claims, **characterised in that** the drum (26) and also the secondary drums (29) revolve around rotating shafts (28-30) which extend in the longitudinal direction of the vehicle (2).

11. Device according to claim 12, **characterised in that** the loading space (3) shows an access opening (25) at its front wall (32) which is situated at a place which corresponds with the lowest position a storage space (27) can occupy, whereby said channel (19) connects in a direct line to said access opening (25).

12. Device according to any one of the preceding claims, **characterised in that** the containers (4) show one or more of the following properties:
- that they consist of oblong recipients, preferably in the shape of a torpedo;
- that they have a length of at least one meter, and preferably at least 1,5 meters;
- that they have a weight of at least 150 kilograms in empty condition;
- that they are internally provided with contact points (58) which allow to make an electric contact with cases (44) or such like which are taken up in the container (4), in order to realise a communication.

13. Device according to claim 14, **characterised in that** the containers (4) are provided with a head (40) which can be opened, to which a lock (41) is applied, which allows that the head (40) can only be opened by means of a code.

14. Device according to any one of the preceding claims, **characterised in that** the loading space is provided with blocking means, with which the containers (4) can be locked in their place.

15. Device according to claim 16, **characterised in that** the blocking means consist of diaphragm-shaped or iris-shaped clamping means (36) which can close themselves around the concerned container (4).

16. Device according to any one of the preceding claims, **characterised in that** it is connected to a data network, preferably with a computer unit (45) at each station (6), which allows that the delivered containers (4) can only be opened by means of an appropriate code.

17. Device according to any one of claims 2 to 18, **characterised in that** the stations (6) consist of cash dispensers or units which co-operate with such cash dispensers, whereby these stations (6) are provided with means which allow that money which has been delivered by means of said containers (4) is automatically inserted in the cash dispensers.

18. Device according to any one of the preceding claims, **characterised in that** it comprises one or more stations (6) for unloading and/or loading the containers (4) and **in that** these stations are mainly formed by a technical room (53), and/or cash dispenser (54).

19. Device according to claim 20, (54), **characterised in that** the cash dispenser (54) is located in the technical room (53).

20. Device according to any one of the preceding claims, whereby it comprises one or more stations (6) for unloading and/or loading containers (4), **characterised in that** one or more of these stations (6) are provided with a container (55) for receiving one or more movable containers (4), whereby the container (55) of the concerned station (6) has one or more of the following properties:
- that the container (55) has a space (20) which allows that the movable container (4) can be taken up therein in such a way that it sticks out of it with a part, more specifically the head (40), in such a way-that the movable container (4) can be emptied while it is present in the space (20);
- that the container (55) is realised in the shape of a magazine;
- that the container (55) is realised in the shape of a drum.

21. Device according to any one of the preceding claims, whereby use is made of transport means (7) to transfer the containers (4) from the vehicle (2) to a station (6) or vice versa, **characterised in that** the transport means (7) have one or more of the following properties:
- that they are of a mechanical or electro-mechanical nature;
- that they use a gate (8) at the vehicle which is located at the height of the outer wall of the vehicle (2) and which can co-operate directly with the gate (10) at the wall of a building (11), in other words without the use of intermediate parts.

## Patentansprüche

1. Vorrichtung zum Befördern von Wertgegenständen, umfassend ein Fahrzeug (2), das mit einem Laderaum (3) mit Behältern (4) für Wertgegenstände (5) versehen ist, die darin aufgenommen beziehungsweise daraus entnommen werden können, und Mittel zum Aufnehmen beziehungsweise Entfernen besagter Behälter (4) in bzw. aus dem Laderaum (3), wobei der Laderaum (3) in Form eines Trommelsystems mit einer rotierenden Trommel (26) verwirklicht ist, **dadurch gekennzeichnet, dass** besagte Trommel (26) mit Sekundärtrommeln (29) versehen ist, die darin rotieren können und die ihrerseits mit Aufbewahrungsräumen (27) versehen sind.

2. Vorrichtung gemäß Anspruch 1, **dadurch gekennzeichnet, dass** sie zumindest eine Station (6) zum Abladen und/oder Aufladen solcher Behälter (4) umfasst; und dass besagte Mittel zur Aufnahme der Behälter (4) im Laderaum (3) beziehungsweise zu deren Entfernen daraus, aus Transportmitteln für die Behälter (4) bestehen, die das Formen einer Verbindung zwischen einer solchen Station (6) und dem Laderaum (3) des Fahrzeugs (2) gestatten, um die Behälter (4) aus dem Laderaum (3) in die Station (6) zu bringen und/oder um Behälter (4) aus der Station (6) in den Laderaum (3) zu bringen.

3. Vorrichtung gemäß Anspruch 2, **dadurch gekennzeichnet, dass** die Transportmittel (7) sowohl eine Luke (8) in Höhe der Außenwand (9) des Fahrzeugs (2), als auch eine entsprechende Luke (10) in einer Wand (11) an der Station (6) umfassen, wobei beide Luken (8-10) derart angeordnet sind, dass sie einander gegenüber positioniert werden können, indem das Fahrzeug (2) mit der Außenwand (9), worin sich die Luke (8) befindet, direkt vor der, und möglicherweise gegen die Wand (11) der Station (6), worin sich die entsprechende Luke (10) befindet, positioniert wird.

4. Vorrichtung gemäß Anspruch 3, **dadurch gekennzeichnet, dass** die Luke (8) des Fahrzeugs (2) sich in der Vorderwand (9) befindet.

5. Vorrichtung gemäß Anspruch 3 oder 4, **dadurch gekennzeichnet, dass** sie mit Positioniermitteln (13-14) versehen ist, die ein korrektes Positionieren des Fahrzeugs (2) in Bezug auf die Station (6) gestatten.

6. Vorrichtung gemäß einem der Ansprüche 3 bis 5, **dadurch gekennzeichnet, dass** sie mit Mitteln versehen ist, die das Herstellen einer Datenverbindung zwischen dem Fahrzeug (2) und der betreffenden Station (6) während des Aufladens und/oder Abladens derartiger Behälter (4) zum Austausch von Überprüfungsdaten gestatten.

7. Vorrichtung gemäß einem der Ansprüche 3 bis 6, **dadurch gekennzeichnet, dass** die Transportmittel (7) einen Kanal (19) umfassen, der sich vom Laderaum (3) bis zu der am Fahrzeug (2) befindlichen entsprechenden Luke (8) erstreckt.

8. Vorrichtung gemäß Anspruch 7, **dadurch gekennzeichnet, dass** der Laderaum (3) sich hinter der Fahrerkabine (18) des Fahrzeugs (2) befindet und dass besagter Kanal (19) sich unter der Fahrerkabine (18) erstreckt, vorzugsweise unter dem Motor (21) des Fahrzeugs (2).

9. Vorrichtung gemäß einem der Ansprüche 3 bis 8, **dadurch gekennzeichnet, dass** zumindest besagte Luken (8-10) mittels bewegbarer Schließvorrichtungen (22-23-24) abgeschlossen sind.

10. Vorrichtung gemäß einem der vorgenannten Ansprüche, **dadurch gekennzeichnet, dass** die Trommel (26) und auch die Sekundärtrommeln (29) sich um rotierende Achsen (28-30) drehen, die sich in Längsrichtung des Fahrzeugs (2) erstrecken.

11. Vorrichtung gemäß Anspruch 12, **dadurch gekennzeichnet, dass** der Laderaum (3) eine Zugangsöffnung (25) an seiner Vorderwand (32) aufweist, die sich an einer Stelle befindet, die mit der niedrigsten Position übereinstimmt, die ein Aufbewahrungsraum (27) einnehmen kann, wobei besagter Kanal (19) in einer direkten Linie an besagte Zugangsöffnung (25) anschließt.

12. Vorrichtung gemäß einem der vorgenannten Ansprüche, **dadurch gekennzeichnet, dass** die Behälter (4) ein oder mehrere der folgenden Eigenschaften aufweisen:
- dass sie aus länglichen Aufnahmebehältern, vorzugsweise in Form eines Torpedos, bestehen;
- dass sie eine Länge von zumindest einem Meter haben, und vorzugsweise zumindest 1,5 Meter;
- dass sie in leerem Zustand ein Gewicht von zumindest 150 Kilogramm haben,
- dass sie innen mit Kontaktpunkten (58) versehen sind, die es gestatten, einen elektrischen Kontakt mit Koffern (44) oder dergleichen zu machen, die in den Behälter (4) aufgenommen sind, um eine Kommunikation zu verwirklichen.

13. Vorrichtung gemäß Anspruch 14, **dadurch gekennzeichnet, dass** die Behälter (4) mit einem Kopf (40) versehen sind, der geöffnet werden kann, woran ein Schloss (41) angebracht ist, das gestattet, dass der Kopf (40) nur mittels eines Codes geöffnet werden kann.

14. Vorrichtung gemäß einem der vorgenannten Ansprüche, **dadurch gekennzeichnet, dass** der Laderaum mit Blockiermitteln versehen ist, womit die Behälter (4) an ihrem Platz verriegelt werden können.

15. Vorrichtung gemäß Anspruch 15, **dadurch gekennzeichnet, dass** die Blockiermittel aus blenden- oder irisförmigen Klemmmitteln (36) bestehen, die sich um den betreffenden Behälter (4) schließen können.

16. Vorrichtung gemäß einem der vorgenannten Ansprüche, **dadurch gekennzeichnet, dass** sie an ein Datennetzwerk angeschlossen ist, vorzugsweise mit einer Computereinheit (45) an jeder Station (6), die gestattet, dass die abgelieferten Behälter (4) nur mittels eines passenden Codes geöffnet werden können.

17. Vorrichtung gemäß einem der Ansprüche 2 bis 18, **dadurch gekennzeichnet, dass** die Stationen (6) aus Bargeldautomaten oder Einheiten, die mit derartigen Bargeldautomaten zusammenarbeiten, bestehen, wobei diese Stationen (6) mit Mitteln versehen sind, die gestatten, dass mittels besagter Behälter (4) angeliefertes Geld automatisch in die Bargeldautomaten eingeführt wird.

18. Vorrichtung gemäß einem der vorgenannten Ansprüche, **dadurch gekennzeichnet, dass** sie ein oder mehr Stationen (6) zum Abladen und/oder Aufladen der Behälter (4) umfasst und dass diese Stationen im Wesentlichen durch einen technischen Raum (53) und/oder Bargeldautomaten (54) gebildet werden.

19. Vorrichtung gemäß Anspruch 20, **dadurch gekennzeichnet, dass** der Bargeldautomat (54) sich in dem technischen Raum (53) befindet.

20. Vorrichtung gemäß einem der vorgenannten Ansprüche, wobei sie ein oder mehrere Stationen (6) zum Abladen und/oder Aufladen von Behältern (4) umfasst, **dadurch gekennzeichnet, dass** eine oder mehrere dieser Stationen (6) mit einem Behälter (55) zur Aufnahme eines oder mehrerer bewegbarer Behälter (4) ausgestattet sind, wobei der Behälter (55) der betreffenden Station (6) eine oder mehrere der folgenden Eigenschaften aufweist:
- dass der Behälter (55) einen Raum (20) aufweist, der gestattet, dass der bewegbare Behälter (4) derart darin aufgenommen werden kann, dass er mit einem Teil, spezieller dem Kopf (40), daraus hervorragt, derart, dass der bewegbare Behälter (4) geleert werden kann, während er sich in dem Raum (20) befindet;
- dass der Behälter (55) in Form eines Magazins verwirklicht ist;
- dass der Behälter (55) in Form einer Trommel verwirklicht ist.

21. Vorrichtung gemäß einem der vorgenannten Ansprüche, wobei Transportmittel (7) zum Befördern der Behälter (4) vom Fahrzeug (2) zu einer Station (6) oder umgekehrt verwendet werden, **dadurch gekennzeichnet, dass** die Transportmittel (7) eine oder mehrere der folgenden Eigenschaften aufweisen:
- dass sie mechanischer oder elektromechanischer Natur sind;
- dass sie eine Luke (8) an dem Fahrzeug nutzen, das in Höhe der Außenwand des Fahrzeugs (2) angeordnet ist und das direkt mit der Luke (10) an der Wand eines Gebäudes (11) zusammenwirken kann, mit anderen Worten, ohne die Verwendung von Zwischenteilen.

## Revendications

1. Dispositif pour transporter des objets de valeur, comprenant un véhicule (2) qui est équipé d'un espace de chargement (3) comprenant des conteneurs (4) pour des objets de valeur (5) qui peuvent venir s'y insérer, en être retirés, respectivement, ainsi que des moyens pour insérer lesdits conteneurs (4) dans l'espace de chargement (3) et pour les en retirer, respectivement, par lequel l'espace de chargement (3) est réalisé sous la forme d'un système à tambour comprenant un tambour rotatif (26), **caractérisé en ce que** ledit tambour (26) est équipé de tambours auxiliaires (29) qui sont en mesure d'effectuer des révolutions dans le premier cité et qui sont, quant à eux, équipés d'espaces de rangement (27).

2. Dispositif selon la revendication 1, **caractérisé en ce qu'**il comprend au moins un poste (6) pour le déchargement et/ou le chargement desdits conteneurs (4) ; et **en ce que** lesdits moyens pour insérer les conteneurs (4) dans l'espace de chargement (3) et pour les en retirer respectivement, sont constitués par des moyens de transport pour les conteneurs (4) qui permettent d'établir une liaison entre ledit poste (6) et l'espace de chargement (3) du véhicule (2) dans le but d'amener les conteneurs (4) depuis l'espace de chargement (3) jusque dans le poste (6) et/ou d'amener les conteneurs (4) depuis le poste (6) jusque dans l'espace de chargement (3).

3. Dispositif selon la revendication 2, **caractérisé en ce que** les moyens de transports (3) comprennent une porte (8) à hauteur de la paroi externe (9) du véhicule (2), ainsi qu'une porte correspondante (10) dans une paroi (11) au poste (6), par lequel les deux portes (8 - 10) sont disposées de telle sorte qu'elles peuvent venir se mettre face à face en positionnant le véhicule (2) de telle sorte que la paroi externe (9), dans laquelle est disposée la porte (8), vient se placer directement devant et, le cas échéant, contre la paroi (11) du poste (6) dans lequel est disposée la porte correspondante (10).

4. Dispositif selon la revendication 3, **caractérisé en ce que** la porte (8) du véhicule (2) est disposée dans la paroi frontale (9).

5. Dispositif selon la revendication 3 ou 4, **caractérisé en ce qu'**il est équipé de moyens de positionnement (13 - 14) qui permettent de positionner correctement le véhicule (2) par rapport au poste (6).

6. Dispositif selon l'une quelconque des revendications 3 à 5, **caractérisé en ce qu'**il est équipé de moyens qui permettent d'établir une transmission de données entre le véhicule (2) et le poste concerné (6) au cours du chargement et/ou du déchargement desdits conteneurs (4), dans le but d'échanger des données de vérification.

7. Dispositif selon l'une quelconque des revendications 3 à 6, **caractérisé en ce que** les moyens de transports (7) comprennent un canal (19) qui s'étend depuis l'espace de chargement (3) jusqu'à la porte correspondante (8) qui est disposée dans le véhicule (2).

8. Dispositif selon la revendication 7, **caractérisé en ce que** l'espace de chargement (3) est disposé à l'arrière de la cabine du conducteur (18) du véhicule (2), et **en ce que** ledit canal (19) s'étend en dessous de la cabine du conducteur (18), de préférence en dessous du moteur (21) du véhicule (2).

9. Dispositif selon l'une quelconque des revendications 3 à 8, **caractérisé en ce qu'**au moins lesdites portes (8 - 10) sont fermées à l'aide de volets mobiles (22 - 23 - 24).

10. Dispositif selon l'une quelconque des revendications précédentes, **caractérisé en ce que** le tambour (26) et également les tambours auxiliaires (29) effectuent des révolutions autour d'arbres rotatifs (28 - 30) qui s'étendent dans la direction longitudinale du véhicule (2).

11. Dispositif selon la revendication 12, **caractérisé en ce que** l'espace de chargement (3) présente une ouverture d'accès (25) dans sa paroi frontale (32) qui est située à un endroit qui correspond à la position la plus basse que peut occuper un espace de stockage (27), par lequel ledit canal (19) est relié en ligne directe à ladite ouverture d'accès (25).

12. Dispositif selon l'une quelconque des revendications précédentes, **caractérisé en ce que** les conteneurs (4) présentent une ou plusieurs des propriétés indiquées ci-après:
- le fait qu'ils sont constitués par des récipients oblongs, de préférence en forme de torpilles ;
- le fait qu'ils possèdent une longueur d'au moins 1 mètre, de préférence d'au moins 1,5 m ;
- le fait qu'ils possèdent un poids d'au moins 150 kg à l'état vide ;
- le fait qu'ils sont munis, à l'intérieur, de points de contact (58) qui permettent d'établir un contact électrique avec des boîtiers (44) ou analogues qui sont insérés dans les conteneurs (4), dans le but d'établir une communication.

13. Dispositif selon la revendication 12, **caractérisé en ce que** les conteneurs (4) sont équipés d'une tête (40) qui peut être ouverte, sur laquelle est appliqué un verrou (41) qui permet d'ouvrir la tête (40) uniquement à l'aide d'un code.

14. Dispositif selon l'une quelconque des revendications précédentes, **caractérisé en ce que** l'espace de chargement est équipé de moyens de verrouillage avec lesquels les conteneurs (4) peuvent être verrouillés en place.

15. Dispositif selon la revendication 16, **caractérisé en ce que** les moyens de verrouillage sont constitués par des moyens de serrage en forme de diaphragme ou en forme d'iris (36) qui peuvent se fermer de manière automatique autour du conteneur concerné (4).

16. Dispositif selon l'une quelconque des revendications précédentes, **caractérisé en ce qu'**il est relié à un réseau de données, de préférence à une unité d'ordinateur (45) à chaque poste (6), ce qui permet d'ouvrir les conteneurs distribués (4) uniquement à l'aide d'un code approprié.

17. Dispositif selon l'une quelconque des revendications 2 à 18, **caractérisé en ce que** les postes (6) sont constitués par des distributeurs automatiques de billets de banque ou par des unités qui coopèrent avec lesdits distributeurs automatiques de billets de banque , par lequel ces postes (6) sont équipés de moyens qui permettent d'insérer de l'argent qui a été distribué à l'aide desdits conteneurs (4) de manière automatique dans les distributeurs de monnaie.

18. Dispositif selon l'une quelconque des revendications précédentes, **caractérisé en ce qu'**il comprend un ou plusieurs postes (6) pour le déchargement et/ou le chargement des conteneurs (4), et **en ce que** ces postes sont principalement réalisés sous la forme d'une chambre technique (53) et/ou d'un distributeur automatique de billets de banque (54).

19. Dispositif selon la revendication 18, **caractérisé en ce que** le distributeur automatique de billets de banque (54) est disposé dans la chambre technique (53).

20. Dispositif selon l'une quelconque des revendications précédentes, par lequel il comprend un ou plusieurs postes (6) pour le déchargement et/ou le chargement de conteneurs (4), **caractérisé en ce que** un ou plusieurs de ces postes (6) sont équipés d'un conteneur (55) pour recevoir un-ou plusieurs conteneurs mobiles (4), par lequel le conteneur (55) du poste concerné (6) possède une ou plusieurs des propriétés indiquées ci-après :
- le fait que le conteneur (55) possède un espace (20) qui permet d'y insérer le conteneur mobile (4) de telle sorte que ce dernier fasse saillie en partie par rapport audit espace, plus spécifiquement avec sa tête (40), de telle sorte que le conteneur mobile (4) peut être vidé lors de sa présence dans l'espace (20);
- le fait que le conteneur (55) est réalisé sous la forme d'un magasin ;
- le fait que le conteneur (55) est réalisé sous la forme d'un tambour.

21. Dispositif selon l'une quelconque des revendications précédentes, par lequel on fait usage des moyens de transport (7) pour transférer les conteneurs (4) depuis le véhicule (2) jusqu'à un poste (6) ou vice versa, **caractérisé en ce que** les moyens de transport (7) possèdent une ou plusieurs des propriétés indiquées ci-après :
- le fait qu'ils sont de nature mécanique ou électromécanique ;
- le fait qu'ils utilisent une porte (8) sur le véhicule, qui est disposée à hauteur de la paroi externe du véhicule (2) et qui est à même de coopérer directement avec la porte (10) sur le mur d'un bâtiment (11), en d'autres termes sans utiliser de pièces intermédiaires.
